# EUROPEAN PATENT APPLICATION

(11) **EP 4 645 440 A1**
(43) Date of publication of application: **05.11.2025**
(21) Application number: 25173947.0
(22) Date of filing: 02.05.2025
(51) Int. Cl.: H01M 4/133, H01M 4/36, H01M 4/48, H01M 4/587, H01M 4/62, H01M 10/052, H01M 4/131, H01M 4/134, H01M 4/38

(54) **ANODE FOR LITHIUM SECONDARY BATTERY AND LITHIUM SECONDARY BATTERY INCLUDING THE SAME**

(30) Priority: 03.05.2024 KR 20240059163
(71) Applicant: SK On Co., Ltd., Seoul 03161 (KR)
(72) Inventor: JEONG, Kwang Ho, 34124 Daejeon (KR); CHOI, Young Gil, 34124 Daejeon (KR)
(74) Representative: Stolmár & Partner Patentanwälte PartG mbB

(57) **Abstract**

An anode for a lithium secondary battery according to exemplary embodiments includes: an anode current collector; a first anode active material layer formed on at least one surface of the anode current collector and including a first anode active material and a first binder; and a second anode active material layer formed on at least one surface of the first anode active material layer and including a second anode active material, a second binder and a cross-linker, wherein the first anode active material layer does not include a cross-linker or includes the cross-linker in a content smaller than that in the second anode active material layer based on weight. Accordingly, the adhesive strength, flexibility, brittleness, and rigidity of the anode are enhanced, and the cycle life characteristics of the lithium secondary battery are improved.

## Description

### [BACKGROUND OF THE INVENTION]

### 1. Field of the Invention

The present disclosure relates to an anode for a lithium secondary battery and a lithium secondary battery including the same, and more specifically, to an anode for a lithium secondary battery which includes an anode active material layer having a multi-layer structure, and a lithium secondary battery including the anode.

### 2. Description of the Related Art

A secondary battery is a battery that can be repeatedly charged and discharged, and has been widely applied to portable electronic devices such as a mobile phone, a laptop computer, etc. as their power sources. Among the secondary batteries, a lithium secondary battery has a high operating voltage and a high energy density per unit weight, making it advantageous in terms of charging speed and lightweight design. In this regard, the lithium secondary battery has been actively developed and applied to various industrial fields.

The lithium secondary battery may include: for example, an electrode assembly including a cathode, an anode and a separation membrane interposed between the cathode and the anode; and an electrolyte in which the electrode assembly is impregnated. The lithium secondary battery may further include a pouch-type outer case in which the electrode assembly and the electrolyte are housed.

As the application scope of lithium secondary batteries continues to expand, development for a lithium secondary battery having a higher capacity and output is progressing. For example, high-capacity silicon and carbon may be prepared and used for an anode active material, but silicon undergoes volume expansion with repeated charging and discharging, which may lead to a deterioration in capacity and cycle life of the battery.

For example, the adhesive strength and flexibility of the anode may be improved by adjusting the type and content of the binder. However, even with such adjustments to the binder, the mechanical stability of the anode may still not be sufficiently secured.

### [SUMMARY OF THE INVENTION]

An embodiment of the present disclosure is to provide an anode for a lithium secondary battery having improved mechanical stability and cycle life characteristics.

Another embodiment of the present disclosure is to provide a lithium secondary battery having improved mechanical stability and cycle life characteristics.

An anode for a lithium secondary battery according to exemplary embodiments includes: an anode current collector; a first anode active material layer formed on at least one surface of the anode current collector and including a first anode active material and a first binder; and a second anode active material layer formed on at least one surface of the first anode active material layer and including a second anode active material, a second binder and a cross-linker. The first anode active material layer may not include a cross-linker or include the cross-linker in a content smaller than that in the second anode active material layer based on weight.

In some embodiments, the first anode active material layer may not include a cross-linker.

In some embodiments, the first binder and the second binder each may include at least one selected from the group consisting of styrene-butadiene rubber, carboxymethyl cellulose, polyacrylic acid, polyacrylamide and polyvinyl alcohol.

In some embodiments, the cross-linker may include at least one selected from the group consisting of organic acids, inorganic acids and epoxy compounds.

In some embodiments, the cross-linker may include at least one selected from the group consisting of dicarboxylic acids and diepoxy compounds.

In some embodiments, the cross-linker may include at least one selected from the group consisting of citric acid, oxalic acid, boric acid, phosphoric acid, succinic acid, fumaric acid, glutaric acid, adipic acid, pimelic acid, maleic acid, lactic acid, and polyethylene glycol diglycidyl ether.

In some embodiments, the first anode active material and the second anode active material may each include at least one selected from the group consisting of a carbon-based active material and a silicon-based active material.

In some embodiments, the carbon-based active material may include at least one selected from the group consisting of artificial graphite and natural graphite.

In some embodiments, the silicon-based active material may include silicon oxide (SiOₓ, 0<x<2).

In some embodiments, a content of the silicon-based active material included in the second anode active material layer may be greater than or equal to the content of the silicon-based active material included in the first anode active material layer.

In some embodiments, the content of the cross-linker included in the second anode active material layer may be 0.01 % by weight to 0.1 % by weight based on a total weight of the second anode active material layer.

In some embodiments, the content of the cross-linker included in the first anode active material layer may be 0.01 % by weight or less based on a total weight of the first anode active material layer.

In some embodiments, the content of the first binder may be 1 % by weight to 5 % by weight based on the total weight of the first anode active material layer, and the content of the second binder may be 1 % by weight to 5 % by weight based on the total weight of the second anode active material layer.

A lithium secondary battery according to exemplary embodiments may include: the above-described anode for a lithium secondary battery; and a cathode disposed to face the anode for a lithium secondary battery.

According to exemplary embodiments, the adhesion between the current collector and the active material layer of the anode for a lithium secondary battery may be improved. In addition, the anode for a lithium secondary battery may have high surface strength and improved durability. Since the electrode resistance of the anode for a lithium secondary battery is low, a battery with improved efficiency may be implemented.

The lithium secondary battery according to exemplary embodiments may exhibit improved cycle life characteristics.

The anode may be widely applied in green technology fields, such as electric vehicles, battery charging stations, as well as solar power generation, wind power generation, and the like, which use the batteries. In addition, the lithium secondary battery may be used in eco-friendly electric vehicles, hybrid vehicles, and the like, which are aimed at mitigating climate change by reducing air pollution and greenhouse gas emission.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic cross-sectional view illustrating an anode for a lithium secondary battery according to exemplary embodiments; and
FIGS. 2 and 3 are schematic plan and cross-sectional views of a lithium secondary battery according to exemplary embodiments, respectively.

### [DETAILED DESCRIPTION OF THE INVENTION]

Embodiments of the present disclosure provide an anode for a lithium secondary battery which includes an anode active material layer having a multi-layer structure. In addition, a lithium secondary battery including the anode is also provided.

As used herein, the "A compound" may refer to a compound including an A unit attached to a matrix, etc. of the "A compound" and a derivative thereof.

As used herein, the "carbon-based active material" may refer to a material that includes carbon but does not include silicon.

As used herein, the "silicon-based active material" may refer to a material that includes silicon.

Hereinafter, the embodiments of the present disclosure will be described in detail. However, these embodiments are merely examples, and the present disclosure is not limited to the specific embodiments described as the example.

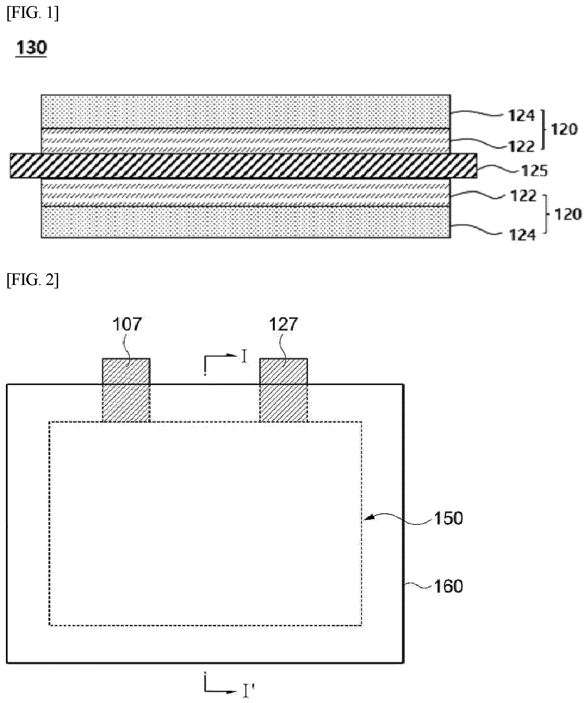

FIG. 1 is a schematic cross-sectional view illustrating an anode for a lithium secondary battery according to exemplary embodiments.

Referring to FIG. 1, an anode 130 may include an anode current collector 125 and an anode active material layer 120 formed on a surface of the anode current collector 125. The anode active material layer 120 may be formed on at least one of upper and lower surfaces of the anode current collector 125, and may be formed on both surfaces (the upper and lower surfaces) of the anode current collector 125, respectively.

For example, the anode current collector 125 may include a highly conductive metal which has provides improved adhesion with the anode slurry and is non-reactive within the voltage range of the secondary battery. The anode current collector 125 may have a thickness of 10 µm to 50 µm, for example, but it is not limited thereto.

For example, the anode current collector 125 may include gold, copper, stainless steel, nickel, aluminum, titanium or an alloy thereof. The anode current collector 125 may include copper or stainless steel having a surface treated with carbon, nickel, titanium, or silver.

The anode active material layer 120 may have a multi-layer structure. According to exemplary embodiments, the anode active material layer 120 may include a first anode active material layer 122 and a second anode active material layer 124, which are sequentially stacked from the surface of the anode current collector 125.

The first anode active material layer 122 may be formed on at least one surface of the anode current collector 125, and may include a first anode active material and a first binder. For example, the first anode active material layer 122 may not include a cross-linker, or may include the cross-linker in a content smaller than that in the second anode active material layer 124 based on weight.

In some embodiments, the first anode active material layer 122 may not include a cross-linker or may include the cross-linker in a very small amount. Or otherwise, the first anode active material layer 122 may not include a cross-linker.

The second anode active material layer 124 is formed on at least one surface of the first anode active material layer 122, and may include a second anode active material, a second binder and a cross-linker.

For example, the first binder and the second binder may disperse the anode active material to achieve sufficient viscosity, and may improve the adhesive strength and flexibility of the anode 130. The cross-linker may suppress the expansion of the second anode active material layer 124. As a result, the adhesive strength and rigidity of the anode may be improved, thereby enhancing the cycle life characteristics of the lithium secondary battery.

For example, when the first anode active material layer 122 includes the cross-linker in a content greater than or equal to the cross-linker included in the second anode active material layer 124 based on weight, a cross-linking reaction may proceed excessively throughout the anode 130. Thereby, the adhesive strength and flexibility of the anode may be reduced, and the cycle life characteristics of the lithium secondary battery may deteriorate.

For example, when the first anode active material layer 122 includes a cross-linker and the second anode active material layer 124 does not include a cross-linker, the adhesion between the first anode active material layer 122 and the anode current collector 125 may decrease, and the strength of the second anode active material layer 124 may be reduced. Accordingly, the cycle life characteristics of the lithium secondary battery may deteriorate.

In some embodiments, the first binder and the second binder may include at least one selected from the group consisting of styrene-butadiene rubber, carboxymethyl cellulose, polyacrylic acid, polyacrylamide and polyvinyl alcohol.

In some embodiments, a content of the first binder may be 1% by weight ("wt%") to 5 wt% based on a total weight of the first anode active material layer 122, and a content of the second binder may be 1 wt% to 5 wt% based on a total weight of the second anode active material layer 124.

For example, the content of the binder included in each of the anode active material layers 122 and 124 may be 1.5 wt% to 4.5 wt%, 2 wt% to 4 wt%, or 2.5 wt% to 3.5 wt% based on the total weight of each of the anode active material layers 122 and 124. Within the above range, the anode active material may be sufficiently dispersed to achieve sufficient viscosity, and the adhesive strength of the anode may be improved.

In some embodiments, the cross-linker may include at least one selected from the group consisting of organic acids, inorganic acids and epoxy compounds.

For example, the organic acid may be citric acid, oxalic acid, fumaric acid, maleic acid, lactic acid, succinic acid, glutaric acid, adipic acid, pimelic acid, etc.

For example, the inorganic acid may be boric acid, phosphoric acid, etc.

For example, the epoxy compound may be polyethylene glycol diglycidyl ether, etc.

In some embodiments, the cross-linker may include at least one selected from the group consisting of dicarboxylic acids and diepoxy compounds.

For example, the dicarboxylic acid may be citric acid, oxalic acid, fumaric acid, maleic acid, succinic acid, glutaric acid, adipic acid, pimelic acid, etc.

For example, the diepoxy compound may be polyethylene glycol diglycidyl ether, etc.

In some embodiments, the cross-linker may include at least one selected from the group consisting of citric acid, oxalic acid, boric acid, phosphoric acid, succinic acid, fumaric acid, glutaric acid, adipic acid, pimelic acid, maleic acid, lactic acid, and polyethylene glycol diglycidyl ether.

In some embodiments, the content of the cross-linker included in the second anode active material layer 124 may be 0.01 wt% to 0.1 wt% based on the total weight of the second anode active material layer 124, and for example, greater than 0.01 wt% and less than 0.1 wt%, 0.015 wt% to 0.08 wt%, 0.02 wt% to 0.05 wt%, or 0.025 wt% to 0.04 wt%. Within the above range, the cross-linked structure of the binder may be sufficiently formed, and the expansion-suppressing ability of the anode may be improved.

In some embodiments, the content of the cross-linker included in the first anode active material layer 122 may be 0.01 wt% or less based on the total weight of the first anode active material layer 122, and for example, less than 0.01 wt%, 0.005 wt% or less, 0.001 wt% or less, 0.0001 wt% or less, or 0.0001 wt% to 0.01 wt%. Within the above range, excessive cross-linking reactions may be suppressed throughout the anode 130.

The first anode active material and the second anode active material included in the first anode active material layer 122 and the second anode active material layer 124, respectively, may include a material capable of intercalating and deintercalating lithium ions. For example, the first anode active material and the second anode active material may each include a carbon-based material such as crystalline carbon, amorphous carbon, a carbon composite, or carbon fibers; lithium metal; a lithium alloy; a silicon (Si)-containing material; or a tin (Sn)-containing material.

In some embodiments, the first anode active material and the second anode active material may each include at least one selected from the group consisting of a carbon-based active material and a silicon-based active material. For example, the types and contents of components included in each of the first anode active material and the second anode active material may be the same or different.

In one embodiment, the carbon-based active material may include at least one of artificial graphite, natural graphite, hard carbon, soft carbon, cokes, carbon black, and fibrous carbon.

In some embodiments, the carbon-based active material may include at least one selected from the group consisting of artificial graphite and natural graphite. In this case, for example, the mechanical stability of the lithium secondary battery may be improved by artificial graphite, and the capacity and output of a lithium secondary battery may be improved by natural graphite.

In one embodiment, the carbon-based active material may include both artificial graphite and natural graphite. Natural graphite may be damaged due to the expansion of the silicon-based active material. Thus, when artificial graphite is used in combination with natural graphite, the adhesive strength of the anode and output of the battery may be improved.

For example, a weight ratio of the artificial graphite to the natural graphite may be 99:1 to 45:55, 9:1 to 5:5, 8:2 to 5:5, or 7:3 to 5:5. Within the above range, the mechanical stability, cycle life characteristics, capacity characteristics and output characteristics of the battery may be improved.

In some embodiments, a content of the carbon-based active material included in the first anode active material layer 122 may be 90 wt% to 96 wt% based on the total weight of the first anode active material layer 122, and a content of the carbon-based active material included in the second anode active material layer 124 may be 80 wt% to 95 wt% based on the total weight of the second anode active material layer 124.

For example, the content of the carbon-based active material included in each of the anode active material layers 122 and 124 may be 80 wt% to 98 wt%, 85 wt% to 97 wt%, or 88 wt% to 96 wt% based on the total weight of each of the anode active material layers 122 and 124. Within the above range, the stability and cycle life characteristics of the lithium secondary battery may be improved.

In one embodiment, the silicon-based active material may include at least one of silicon (Si), a silicon alloy, a silicon oxide (SiOₓ, 0<x<2), a silicon-carbon (Si-C) composite, and a silicon (Si) alloy-carbon composite, and may include, for example, silicon oxide (SiOₓ, 0<x<2).

In some embodiments, the content of the silicon-based active material included in the second anode active material layer 124 may be greater than or equal to the content of the silicon-based active material included in the first anode active material layer 122. Accordingly, the lithium ion storage capacity of the second anode active material layer 124 may increase and the resistance of the lithium secondary battery may decrease.

In some embodiments, the content of the silicon-based active material included in the first anode active material layer 122 may be 4 wt% or less, 3 wt% or less, or 2 wt% or less based on the total weight of the first anode active material layer 122, and the content of the silicon-based active material included in the second anode active material layer 124 may be 1 wt% to 10 wt%, 2 wt% to 9 wt%, or 4 wt% to 8 wt% based on the total weight of the second anode active material layer 124.

Within the above-described content ranges of the silicon-based active material included in each of the anode active material layers 122 and 124, the capacity characteristics and output characteristics of the lithium secondary battery may be improved.

In one embodiment, when the first anode active material and the second anode active material each include the carbon-based active material and the silicon-based active material, the volume expansion of the silicon-based active material may be buffered by the carbon-based active material. Accordingly, the high-capacity characteristics of silicon may be implemented, while improving the cycle life of the battery.

For example, the first anode active material layer 122 may be formed by applying a first anode active material composition including a carbon-based active material and a silicon-based active material to the anode current collector 125, followed by drying and pressing the same. The second anode active material layer 124 may be formed by applying a second anode active material composition including a carbon-based active material and a silicon-based active material to the first anode active material layer 122, followed by drying and pressing the same.

For example, the carbon-based active material and the silicon-based active material may be mixed with the above-described binder, conductive material, and/or dispersant in a solvent to prepare the first anode active material composition and the second anode active material composition.

In one embodiment, the first anode active material composition and the second anode active material composition may each further include the cross-linker within the above-described content range, and the first anode active material composition may not include a cross-linker or include the cross-linker in a very small amount.

The application process may be performed by methods such as gravure coating, slot die coating, simultaneous multilayer die coating, imprinting, doctor blade coating, dip coating, bar coating, casting, etc., but it is not limited thereto.

Non-limiting examples of the solvent may include water, pure water, deionized water, distilled water, ethanol, isopropanol, methanol, acetone, n-propanol, t-butanol, etc.

The conductive material may be included to facilitate electron transfer between the active material particles. For example, the conductive material may include a carbon-based conductive material such as graphite, carbon black, graphene, or carbon nanotubes and/or a metal-based conductive material including tin, tin oxide, titanium oxide, or a perovskite material such as LaSrCoO₃, and LaSrMnO₃, etc.

As the thickener, for example, carboxymethyl cellulose (CMC) may be used.

In some embodiments, the first anode active material layer 122 may have a thickness of 10% to 90% based on the total thickness of the anode active material layer 120. Within the above thickness range, fast-charging cycle life characteristics and room-temperature cycle life characteristics may be improved.

According to one embodiment, the thickness of the first anode active material layer 122 and the thickness of the second anode active material layer 124 may be substantially the same.

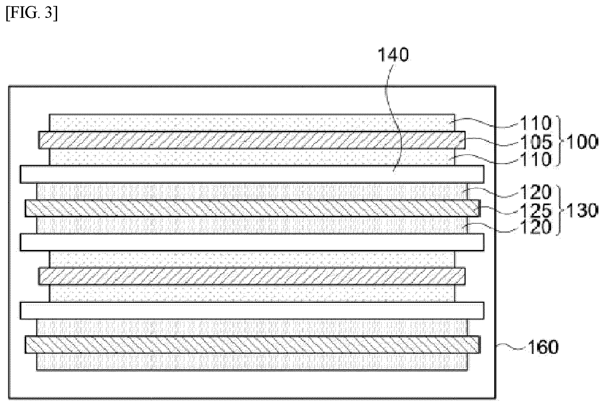

FIGS. 2 and 3 are schematic plan and cross-sectional views illustrating a lithium secondary battery according to exemplary embodiments, respectively. Specifically, FIG. 3 is a cross-sectional view taken on line I-I' in FIG. 2. The secondary battery structures shown in FIGS. 2 and 3 are schematically illustrated, and the secondary battery structures according to the present disclosure are not limited thereto.

Referring to FIGS. 2 and 3, the lithium secondary battery may include an electrode assembly 150 including the above-described anode 130 and a cathode 100 disposed to face the anode 130. The electrode assembly 150 may be housed in a case 160 and impregnated with an electrolyte.

The cathode 100 may include a cathode current collector 105 and a cathode active material layer 110 disposed on at least one surface of the cathode current collector 105.

The cathode current collector 105 may include stainless steel, nickel, aluminum, titanium, or an alloy thereof. The cathode current collector may also include aluminum or stainless steel having a surface treated with carbon, nickel, titanium, or silver. The cathode current collector may have a thickness of 10 µm to 50 µm, but it is not limited thereto.

For example, the cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.6≤a≤0.99, 0.01≤b≤0.4, -0.5≤z≤0.1. As described above, M may include Co, Mn and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together the main active elements to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the output activity of the cathode active material together with Co or Mn like Al.

For example, the cathode active material or the lithium-nickel metal oxide may include a layered structure or crystal structure represented by Formula 1-1 below.

[Formula 1-1] LiₓNiₐM1_{b1}M2_{b2}O_{2+z}

In Formula 1-1, M1 may include Co, Mn, and/or Al. M2 may include the auxiliary elements described above. In Formula 1-1, x, a, b1, b2 and z may satisfy 0.9≤x≤1.2, 0.6≤a≤0.99, 0.01≤b1+b2≤0.4, -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of lithium-nickel metal oxide particles to become incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Ni may be provided as a transition metal associated with the output and capacity of the lithium secondary battery. Therefore, as described above, by employing a high-content (High-Ni) composition in the cathode active material, a high-capacity cathode and a high-capacity lithium secondary battery may be provided.

However, as the content of Ni is increased, long-term storage stability and cycle life stability of the cathode or the secondary battery may be relatively decreased, and a side reaction with the electrolyte may also be increased. However, according to exemplary embodiments, the cycle life stability and capacity retention characteristics may be improved through Mn while maintaining electrical conductivity by including Co.

The content of Ni (e.g., a molar fraction of nickel based on the total number of moles of nickel, cobalt and manganese) in the NCM-based lithium oxide may be 0.6 or more, 0.7 or more, or 0.8 or more. In some embodiments, the content ofNi may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., LiFePO₄).

In some embodiments, the cathode active material may include a manganese (Mn)-rich active material, a lithium rich layered oxide (LLO)/over lithiated oxide (OLO)-based active material, or a cobalt (Co)-less active material, which have a chemical structure or crystal structure represented by Formula 2 below.

[Formula 2] p[Li₂MnO₃]·(1-p)[Li_{q}JO₂]

In Formula 2, p and q may satisfy 0<p<1, 0.9≤q≤1.2, and J may include at least one element among Mn, Ni, Co, Fe, Cr, V, Cu, Zn, Ti, Al, Mg and B.

For example, the cathode active material may be dispersed in a solvent to prepare a cathode slurry. The cathode current collector 105 may be coated with the cathode slurry, and then dried and pressed to prepare the cathode 100. The coating process may be performed using methods such as gravure coating, slot die coating, simultaneous multilayer die coating, imprinting, doctor blade coating, dip coating, bar coating or casting, etc., but it is not limited thereto. The cathode slurry may further include a binder, and optionally further include a conductive material, a thickener or the like.

Non-limiting examples of a solvent used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder included in the cathode slurry may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR) and the like. In one embodiment, a PVDF-based binder may be used as the cathode binder.

The conductive material may be added to enhance the conductivity of the cathode slurry layer and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as LaSrCoO₃, and LaSrMnO₃.

The cathode slurry may further include a thickener and/or a dispersant, as necessary. In one embodiment, the cathode slurry may include a thickener such as carboxymethyl cellulose (CMC).

The anode 130 may be formed as described above.

In one embodiment, a separation membrane 140 may be interposed between the cathode 100 and the anode 130. The separation membrane may prevent electrical short-circuit between the cathode and the anode, and maintain flow of ions. According to an embodiment, the separation membrane may have a thickness of 10 µm to 20 µm, but in the present disclosure, it is not limited thereto.

The separation membrane may include a porous polymer film or a porous nonwoven fabric. The porous polymer film may include a polyolefin-based polymer such as an ethylene polymer, a propylene polymer, an ethylene/butene copolymer, an ethylene/hexene copolymer, and an ethylene/methacrylate copolymer, etc. The porous nonwoven fabric may include glass fibers having a high melting point, polyethylene terephthalate fibers, etc.

The separation membrane may also include a ceramic-based material. For example, inorganic particles may be applied to the polymer film or dispersed within the polymer film to improve heat resistance.

The separation membrane may have a single-layer or multi-layer structure including the above-described polymer film and/or non-woven fabric.

According to exemplary embodiments, the cathode 100, the anode 130 and the separation membrane 140 may be repeatedly disposed to form an electrode assembly 150. In some embodiments, the electrode assembly 150 may have a jelly roll shape formed by winding, stacking, z-folding, or stack-folding the separation membrane 140.

In one embodiment, the electrode assembly 150 may have a jelly roll shape formed by winding the cathode 100, the anode 130 and the separation membrane 140 together. In one embodiment, the electrode assembly 150 may have a jelly roll shape in which the notched cathodes and anodes are disposed in a space formed by repeatedly z-folding the separation membrane 140.

In one embodiment, the electrode assembly may be formed by repeatedly stacking the cathodes, anodes, and separation membranes with the respective layers being cut or separated from each other.

For example, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead and an anode lead) that extend or are exposed to the outside of the case 160.

For example, a pouch-type case, a square case, a cylindrical-shaped case, or a coin-shaped case, etc. may be used to house the battery.

The electrode assembly 150 may be housed in the case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄]PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₃)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

The organic solvent may include an organic compound which has sufficient solubility for the lithium salt and the additive, and is electrochemically stable without exhibiting reactivity in the battery. For example, the organic solvent may include at least one of a carbonate solvent, an ester solvent, an ether solvent, a ketone solvent, an alcohol solvent and an aprotic solvent.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalato) borate, etc.

### Example 1

### (1) Preparation of anode

A first anode active material composition in the form of a slurry was prepared by mixing 46.4 wt% and 46.4 wt% of artificial graphite and natural graphite as a carbon-based active material, respectively, 4 wt% of SiOₓ (0<x<2) as a silicon-based active material, 1.2 wt% of CMC binder, 1.5 wt% of SBR binder, and 0.5 wt% of CNT conductive material, and then adding water to the mixture.

A second anode active material composition was prepared in the same manner as the first anode active material composition, except that the contents of artificial graphite and natural graphite were changed to 46.385 wt% and 46.385 wt%, respectively, and 0.03 wt% of citric acid was additionally added as a cross-linker.

The prepared first anode active material composition and the prepared second anode active material composition were sequentially applied to one surface of a copper current collector (a copper foil having a thickness of 8 µm), and then dried and pressed to prepare an anode including a first anode active material layer and a second anode active material layer.

### (2) Manufacture of lithium secondary battery

A slurry was prepared by mixing Li[Ni_{0.88}Co_{0.1}Mn_{0.02}]O₂ as a cathode active material, MWCNTs as a conductive material, and polyvinylidene fluoride (PVdF) as a binder in a weight ratio of 98.08:0.72:1.2. The slurry was uniformly applied to an aluminum foil having a thickness of 12 µm, and vacuum dried to manufacture a cathode for a secondary battery. At this time, about 20 wt% of the MWCNT content was composed of a CNT dispersant.

The cathode and the anode were respectively notched into a predetermined size and stacked, then an electrode cell was fabricated by interposing a separator (polyethylene, thickness: 13 µm) between the cathode and the anode. Thereafter, tap parts of the cathode and the anode were welded, respectively. The assembly of the welded cathode/separator/anode was placed into a pouch, and three sides of the pouch were sealed, leaving one side open for electrolyte injection. At this time, a portion having the electrode tab was included in the sealing part.

An electrolyte was injected through the remaining side except for the sealing parts, and the remaining side was sealed, followed by impregnation for 12 hours or more, to manufacture a lithium secondary battery.

A solution, prepared by dissolving 1.1 M LiPF₆ in a mixed solvent of EC/EMC (25/75; volume ratio), and further adding 8 wt% of fluoroethylene carbonate (FEC), 0.5 wt% of 1,3-propene sultone (PRS), 0.5 wt% of 1,3-propane sultone (PS), and 0.5 wt% of ethylene sulfate(ESA), was used as the electrolyte.

Then, heat press pre-charging was performed on the lithium secondary battery for 60 minutes at a current corresponding to an average of 0.5 C. After stabilization for 12 hours or more, degassing was performed, followed by aging for 24 hours or more. Thereafter, formation charging and discharging was performed (charging conditions: CC-CV 0.25C 4.2V 0.05C CUT-OFF, discharging conditions: CC 0.25C 2.5V CUTOFF).

Subsequently, standard charging and discharging was performed (charging conditions: CC-CV 0.33 C 4.2 V 0.05 C CUT-OFF, discharge conditions: CC 0.33 C 2.5 V CUT-OFF).

### Example 2

An anode and a lithium secondary battery were manufactured in the same manner as in Example 1, except that 0.03 wt% of oxalic acid was added instead of citric acid as a cross-linker introduced into the second anode active material composition.

### Example 3

An anode and a lithium secondary battery were manufactured in the same manner as in Example 1, except that 0.03 wt% of boric acid was added instead of citric acid as a cross-linker introduced into the second anode active material composition.

### Example 4

An anode and a lithium secondary battery were manufactured in the same manner as in Example 1, except that 0.03 wt% of polyethylene glycol diglycidyl ether (PEGDE) was added instead of citric acid as a cross-linker introduced into the second anode active material composition.

### Example 5

An anode and a lithium secondary battery were manufactured in the same manner as in Example 1, except that, when preparing the first anode active material composition and the second anode active material composition, CMC binder was not used, the content of the SBR binder was changed to 1.0 wt%, 1.7 wt% of a polyacrylic acid-polyvinyl alcohol (PAA-PVA) binder was used, and 0.03 wt% of oxalic acid was used instead of citric acid as a cross-linker introduced into the second anode active material composition.

### Example 6

An anode and a lithium secondary battery were manufactured in the same manner as in Example 2, except that the contents of artificial graphite, natural graphite and SiOₓ (0<x<2) added to the first anode active material composition were changed to 47.4 wt%, 47.4 wt% and 2 wt%, respectively, and the contents of artificial graphite, natural graphite and SiOₓ (0<x<2) added to the second anode active material composition were changed to 45.385 wt%, 45.385 wt% and 6 wt%, respectively.

### Example 7

An anode and a lithium secondary battery were manufactured in the same manner as in Example 2, except that the contents of artificial graphite and natural graphite introduced into the first anode active material composition were changed to 48.4 wt% and 48.4 wt%, respectively, and SiOₓ (0<x<2) was not used, and the contents of artificial graphite, natural graphite and SiOₓ (0<x<2) introduced into the second anode active material composition were changed to 44.385 wt%, 44.385 wt% and 8 wt%, respectively.

### Example 8

An anode and a lithium secondary battery were manufactured in the same manner as in Example 1, except that 0.03 wt% of oxalic acid was added instead of citric acid as a cross-linker introduced into the second anode active material composition, the contents of artificial graphite and natural graphite added to the first anode active material composition were changed to 46.395 wt% and 46.395 wt%, respectively, and 0.01 wt% of oxalic acid was additionally added as a cross-linker to the first anode active material composition.

### Comparative Example 1

An anode and a lithium secondary battery were manufactured in the same manner as in Example 1, except that the contents of artificial graphite and natural graphite added to the second anode active material composition were changed to 46.4 wt% and 46.4 wt%, respectively, and citric acid as a cross-linker was not added

### Comparative Example 2

An anode and a lithium secondary battery were manufactured in the same manner as in Example 1, except that the contents of artificial graphite and natural graphite added to the first anode active material composition were changed to 46.385 wt% and 46.385 wt%, respectively, and 0.03 wt% of citric acid was additionally added as a cross-linker to the first anode active material composition.

### Comparative Example 3

An anode and a lithium secondary battery were manufactured in the same manner as in Example 1, except that the contents of artificial graphite and natural graphite added to the first anode active material composition were changed to 46.385 wt% and 46.385 wt%, respectively, and 0.03 wt% of oxalic acid was additionally added as a cross-linker, and 0.03 wt% of oxalic acid was added instead of citric acid as a cross-linker introduced into the second anode active material composition.

### Comparative Example 4

An anode and a lithium secondary battery were manufactured in the same manner as in Example 1, except that, when preparing the first anode active material composition and the second anode active material composition, CMC binder was not used, the content of the SBR binder was changed to 1.0 wt%, 1.7 wt% of the polyacrylic acid-polyvinyl alcohol (PAA-PVA) binder was used, the contents of artificial graphite and natural graphite added to the second anode active material composition were changed to 46.4 wt% and 46.4 wt%, respectively, and citric acid as a cross-linker was not added to the second anode active material composition.

### Comparative Example 5

An anode and a lithium secondary battery were manufactured in the same manner as in Example 1, except that, when preparing the first anode active material composition and the second anode active material composition, CMC binder was not used, the content of the SBR binder was changed to 1.0 wt%, 1.7 wt% of a polyacrylic acid-polyvinyl alcohol (PAA-PVA) binder was used, the contents of artificial graphite and natural graphite introduced into the second anode active material composition were changed to 46.385 wt% and 46.385 wt%, respectively, 0.03 wt% of oxalic acid was additionally added as a cross-linker to the first anode active material composition, and 0.03 wt% of oxalic acid was added instead of citric acid as a cross-linker introduced into the second anode active material composition.

### Comparative Example 6

An anode and a lithium secondary battery were manufactured in the same manner as in Comparative Example 1, except that the contents of artificial graphite and natural graphite added to the first anode active material composition were changed to 46.385 wt% and 46.385 wt%, respectively, and 0.03 wt% of oxalic acid was additionally added as a cross-linker.

The contents of the components included in the anode active material layers of the examples and comparative examples are described in Tables 1 and 2 below, respectively, and the thicknesses of the first anode active material layer and the second anode active material layer were the same.

**[TABLE 1]**

| Item | Anode active material layer | Component (wt%) | | | | | |
|---|---|---|---|---|---|---|---|
| | | Artificial graphite | Natural graphite | SiOₓ (0<x<2) | Binder | Cross-linker | Conductive material |
| Example 1 | Second anode active material layer | 46.385 | 46.385 | 4 | CMC 1.2, SBR 1.5 | Citric acid 0.03 | CNT 0.5 |
| | First anode active material layer | 46.4 | 46.4 | 4 | CMC 1.2, SBR 1.5 | - | CNT 0.5 |
| Example 2 | Second anode active material layer | 46.385 | 46.385 | 4 | CMC 1.2, SBR 1.5 | Oxalic acid 0.03 | CNT 0.5 |
| | First anode active material layer | 46.4 | 46.4 | 4 | CMC 1.2, SBR 1.5 | - | CNT 0.5 |
| Example 3 | Second anode active material layer | 46.385 | 46.385 | 4 | CMC 1.2, SBR 1.5 | Boric acid 0.03 | CNT 0.5 |
| | First anode active material layer | 46.4 | 46.4 | 4 | CMC 1.2, SBR 1.5 | - | CNT 0.5 |
| Example 4 | Second anode active material layer | 46.385 | 46.385 | 4 | CMC 1.2, SBR 1.5 | PEGDE 0.03 | CNT 0.5 |
| | First anode active material layer | 46.4 | 46.4 | 4 | CMC 1.2, SBR 1.5 | - | CNT 0.5 |
| | Anode active material layer entire | 46.3925 | 46.3925 | 4 | 2.7 | 0.015 | CNT0.5 |
| Example 5 | Second anode active material layer | 46.385 | 46.385 | 4 | PAA-PVA 1.7, SBR 1.0 | Oxalic acid 0.03 | CNT 0.5 |
| | First anode active material layer | 46.4 | 46.4 | 4 | PAA-PVA 1.7, SBR 1.0 | - | CNT 0.5 |
| Example 6 | Second anode active material layer | 45.385 | 45.385 | 6 | CMC 1.2, SBR 1.5 | Oxalic acid 0.03 | CNT 0.5 |
| | First anode active material layer | 47.4 | 47.4 | 2 | CMC 1.2, SBR 1.5 | - | CNT 0.5 |
| Example 7 | Second anode active material layer | 44.385 | 44.385 | 8 | CMC 1.2, SBR 1.5 | Oxalic acid 0.03 | CNT 0.5 |
| | First anode active material layer | 48.4 | 48.4 | 0 | CMC 1.2, SBR 1.5 | - | CNT 0.5 |
| Example 8 | Second anode active material layer | 46.385 | 46.385 | 4 | CMC 1.2, SBR 1.5 | Oxalic acid 0.03 | CNT 0.5 |
| | First anode active material layer | 46.395 | 46.395 | 4 | CMC 1.2, SBR 1.5 | Oxalic acid 0.01 | CNT 0.5 |

**[TABLE 2]**

| Item | Anode active material layer | Component (wt%) | | | | | |
|---|---|---|---|---|---|---|---|
| | | Artificial graphite | Natural graphite | SiOₓ (0<x<2) | Binder | Cross-linker | Conductive material |
| Comparati ve Example 1 | Second anode active material layer | 46.4 | 46.4 | 4 | CMC 1.2, SBR 1.5 | - | CNT 0.5 |
| | First anode active material layer | 46.4 | 46.4 | 4 | CMC 1.2, SBR 1.5 | - | CNT 0.5 |
| Comparati ve Example 2 | Second anode active material layer | 46.385 | 46.385 | 4 | CMC 1.2, SBR 1.5 | Citric acid 0.03 | CNT 0.5 |
| | First anode active material layer | 46.385 | 46.385 | 4 | CMC 1.2, SBR 1.5 | Citric acid 0.03 | CNT 0.5 |
| Comparati ve Example 3 | Second anode active material layer | 46.385 | 46.385 | 4 | CMC 1.2, SBR 1.5 | Oxalic acid 0.03 | CNT 0.5 |
| | First anode active material layer | 46.385 | 46.385 | 4 | CMC 1.2, SBR 1.5 | Oxalic acid 0.03 | CNT 0.5 |
| Comparati ve Example 4 | Second anode active material layer | 46.4 | 46.4 | 4 | PAA-PVA 1.7, SBR 1.0 | - | CNT 0.5 |
| | First anode active material layer | 46.4 | 46.4 | 4 | PAA-PVA 1.7, SBR 1.0 | - | CNT 0.5 |
| Comparati ve Example 5 | Second anode active material layer | 46.385 | 46.385 | 4 | PAA-PVA 1.7, SBR 1.0 | Oxalic acid 0.03 | CNT 0.5 |
| | First anode active material layer | 46.385 | 46.385 | 4 | PAA-PVA 1.7, SBR 1.0 | Oxalic acid 0.03 | CNT 0.5 |
| Comparati ve Example 6 | Second anode active material layer | 46.4 | 46.4 | 4 | CMC 1.2, SBR 1.5 | - | CNT 0.5 |
| | First anode active material layer | 46.385 | 46.385 | 4 | CMC 1.2, SBR 1.5 | Oxalic acid 0.03 | CNT 0.5 |

The components described in Tables 1 and 2 are as follows:
CMC: Carboxymethyl cellulose
SBR: Styrene-butadiene rubber
CNT: Carbon nanotube
PAA-PVA: Polyacrylic acid-polyvinyl alcohol copolymer
PEGDE: Polyethylene glycol diglycidyl ether

### Experimental example

### 1. Evaluation of adhesive strength of the anode

For the anodes of the examples and comparative examples, the adhesive strength was measured using an adhesive strength measuring device (IMADA Z Link 3.1). Specifically, the adhesive strength was evaluated by measuring the force required to peel off a tape with a width of 18 mm that had been attached to the anode surface at an angle of 90°. The evaluation results are shown in Table 3 below.

### 2. Evaluation of scratch resistance

For the anodes of the examples and comparative examples, the scratch resistance was measured using a Surface and Interfacial Cutting Analysis System (SAICAS).

The horizontal force (FH) applied to a blade, during cutting the second anode active material layer from the surface to a depth corresponding to 25% of the electrode thickness at a horizontal speed of 0.05 µm/s using a boron nitride blade (width: 1 mm) having a shear angle of 45°, an inclination angle of 20°, and a clearance angle of 10°, was measured. The horizontal force was defined as the scratch resistance (kN/m) of the second anode active material layer. The evaluation results are shown in Table 3 below.

### 3. Evaluation of battery resistance

For the lithium secondary batteries of the examples and comparative examples, the DC-IR resistance at a state of charge (SOC) of 50% was measured.

The discharge capacity, determined based on charge (CC-CV 1/3C 4.2V 0.05C CUT-OFF) and discharge (CC 1/3C 2.5V CUT-OFF) conditions, was regarded as the capacity of the battery. After adjusting the SOC to 50% for all batteries, a current corresponding to 1C was applied for 10 seconds to measure the battery resistance. The evaluation results are shown in Table 3 below.

### 4. Evaluation of cycle life characteristics

Charging (CC-CV 1/3C 4.2V 0.05C CUT-OFF) and discharging (CC 1/3C 2.5V CUT-OFF) were performed on the lithium secondary batteries of the examples and comparative examples using a charge/discharge tester, and the discharge capacity was measured. The charge and discharge cycles were repeated 500 times, and the discharge capacity after 500 cycles was calculated as a percentage ratio (%) relative to the discharge capacity after the first cycle to determine the capacity retention rate. The evaluation results are shown in Table 3 below.

**[TABLE 3]**

| Item | Adhesive strength of anode (N/18 mm) | Scratch resistance of second anode active material layer (kN/m) | DC-IR (SOC 50%, mOhm) | Capacity retention rate (500th cycle, %) |
|---|---|---|---|---|
| Example 1 | 0.41 | 157.6 | 1.03 | 92.2 |
| Example 2 | 0.42 | 158.8 | 1.04 | 94.0 |
| Example 3 | 0.42 | 155.4 | 1.03 | 92.4 |
| Example 4 | 0.43 | 159.9 | 1.04 | 91.6 |
| Example 5 | 0.36 | 166.9 | 1.07 | 93.3 |
| Example 6 | 0.42 | 159.2 | 0.97 | 94.1 |
| Example 7 | 0.43 | 159.3 | 0.92 | 93.9 |
| Example 8 | 0.39 | 158.0 | 1.06 | 93.7 |
| Comparative Example 1 | 0.42 | 135.7 | 1.04 | 88.4 |
| Comparative Example 2 | 0.26 | 157.1 | 1.09 | 85.9 |
| Comparative Example 3 | 0.27 | 159.5 | 1.10 | 86.5 |
| Comparative Example 4 | 0.35 | 145.0 | 1.07 | 90.4 |
| Comparative Example 5 | 0.26 | 166.3 | 1.11 | 84.6 |
| Comparative Example 6 | 0.25 | 136.1 | 1.14 | 81.0 |

Referring to Table 3, the adhesive strength and rigidity were improved in the anodes of Examples 1 to 8, and the resistance was low while the cycle life characteristics were improved in the lithium secondary batteries of Examples 1 to 8.

In the anodes of Comparative Examples 1 and 4, where the first anode active material layer and the second anode active material layer did not include a cross-linker, the scratch resistance of the second anode active material layer was low, and the batteries of Comparative Examples 1 and 4 exhibited low capacity retention rate.

In the anodes of Comparative Examples 2, 3 and 5, where the same content of cross-linker was included in both the first anode active material layer and the second anode active material layer, the adhesive strength was low, and the batteries of Comparative Examples 2, 3 and 5 exhibited high resistance and low capacity retention rate.

In the anode of Comparative Example 6, where the second anode active material layer did not include a cross-linker and the first anode active material layer included a cross-linker, the adhesive strength and scratch resistance of the second anode active material layer were low, and the lithium secondary battery of Comparative Example 6 exhibited high resistance and low capacity retention rate.

### [Description of Reference Numerals]

100: Cathode
105: Cathode current collector
107: Cathode lead
110: Cathode active material layer
120: Anode active material layer
122: First anode active material layer
124: Second anode active material layer
125: Anode current collector
127: Anode lead
130: Anode
140: Separation membrane
150: Electrode assembly
160: Case

## Claims

1. An anode for a lithium secondary battery comprising:
an anode current collector;
a first anode active material layer formed on at least one surface of the anode current collector and comprising a first anode active material and a first binder; and
a second anode active material layer formed on at least one surface of the first anode active material layer and comprising a second anode active material, a second binder and a cross-linker,
wherein the first anode active material layer does not comprise a cross-linker or comprises the cross-linker in a content smaller than that in the second anode active material layer based on weight.

2. The anode for a lithium secondary battery according to claim 1, wherein the first anode active material layer does not comprise a cross-linker.

3. The anode for a lithium secondary battery according to claim 1 or 2, wherein the first binder and the second binder each comprise at least one selected from the group consisting of styrene-butadiene rubber, carboxymethyl cellulose, polyacrylic acid, polyacrylamide and polyvinyl alcohol.

4. The anode for a lithium secondary battery according to any one of claims 1 to 3, wherein the cross-linker comprises at least one selected from the group consisting of organic acids, inorganic acids and epoxy compounds.

5. The anode for a lithium secondary battery according to any one of claims 1 to 4, wherein the cross-linker comprises at least one selected from the group consisting of dicarboxylic acids and diepoxy compounds.

6. The anode for a lithium secondary battery according to any one of claims 1 to 5, wherein the cross-linker comprises at least one selected from the group consisting of citric acid, oxalic acid, boric acid, phosphoric acid, succinic acid, fumaric acid, glutaric acid, adipic acid, pimelic acid, maleic acid, lactic acid, and polyethylene glycol diglycidyl ether.

7. The anode for a lithium secondary battery according to any one of claims 1 to 6, wherein the first anode active material and the second anode active material each comprise at least one selected from the group consisting of a carbon-based active material and a silicon-based active material.

8. The anode for a lithium secondary battery according to claim 7, wherein the carbon-based active material comprises at least one selected from the group consisting of artificial graphite and natural graphite.

9. The anode for a lithium secondary battery according to claim 7, wherein the silicon-based active material comprises silicon oxide (SiOₓ, 0<x<2).

10. The anode for a lithium secondary battery according to claim 7, wherein a content of the silicon-based active material included in the second anode active material layer is greater than or equal to the content of the silicon-based active material included in the first anode active material layer.

11. The anode for a lithium secondary battery according to any one of claims 1 to 10, wherein the content of the cross-linker included in the second anode active material layer is 0.01 % by weight to 0.1 % by weight based on a total weight of the second anode active material layer.

12. The anode for a lithium secondary battery according to any one of claims 1 to 11, wherein the content of the cross-linker included in the first anode active material layer is 0.01 % by weight or less based on a total weight of the first anode active material layer.

13. The anode for a lithium secondary battery according to any one of claims 1 to 12, wherein the content of the first binder is 1 % by weight to 5 % by weight based on the total weight of the first anode active material layer, and
the content of the second binder is 1 % by weight to 5 % by weight based on the total weight of the second anode active material layer.

14. A lithium secondary battery comprising:
the anode for a lithium secondary battery according to any one of claims 1 to 13; and
a cathode disposed to face the anode for a lithium secondary battery.
